# EUROPEAN PATENT SPECIFICATION

(11) **EP 0 745 560 B1**
(45) Date of publication and mention of the grant of the patent: **27.11.2002**
(21) Application number: 95303829.6
(22) Date of filing: 02.06.1995
(51) Int. Cl.: C01F 5/00, C01B 13/14, C01G 3/00, C01G 9/00, C01G 45/00, C01G 49/00, C01G 51/00, C01G 53/00, C01F 5/14, C09K 21/02

(54) **Magnesium hydroxide solid solutions, their production method and use**
Feste Lösungen von Magnesiumhydroxid, Verfahren zur ihre Herstellung und ihre Anwendung
Solutions solides d'hydroxide de magnésium, procédé pour leurs préparations et leurs utilisations

(43) Date of publication of application: 04.12.1996
(73) Proprietor: TATEHO CHEMICAL INDUSTRIES CO., LTD., Ako-shi, Hyogo 678-02 (JP)
(72) Inventor: Miyata, Shigeo, Kitakyushu-shi, Fukuoka 807-11 (JP); Kitano, Yasunori, Hyogo 678-02 (JP); Kotani, Toshikazu, Hyogo 678-02 (JP); Koresawa, Mitsuru, Osaka 569 (JP); Kurisu, Hirofumi, Hyogo 678-01 (JP); Tottotsu, Kiminari, Hyogo 678-02 (JP)
(74) Representative: Wakerley, Helen Rachael

(56) References cited:
- EP-A- 0 498 566
- EP-A- 0 517 448
- EP-A- 0 544 502
- PATENT ABSTRACTS OF JAPAN vol. 095, no. 003 (--0000) & JP-A-07 061 812 (TATEHO CHEM IND) 7 March 1995
- DATABASE WPI Section Ch, Week 9323, Derwent Publications Ltd., London, GB; Class E31, AN 185282 KYOWA KAGAKU KOGYO 'Flame retardant for flame-resistant resin composition.' & JP-A-5 112 669 7 May 1993
- Translation in English of JP-A-7061812

## Description

### FIELD OF THE INVENTION

This invention relates to a new type of magnesium hydroxide solid solution and its method of production, and a flame retardant material and/or rubber composition containing a magnesium hydroxide solid solution in the resin and/or rubber and a flame retardant material containing magnesium hydroxide solid solution as its effective element.

More precisely, by having the divalent transition metal distributed mainly in the vicinity of the surface of the crystals of the magnesium hydroxide solid solution, it is possible to bring about a new type of magnesium hydroxide solid solution which results in the greatest effectiveness of the transition metal with the minimum amount of concentration.

The invention also involves the method of production thereof, and a resin and/or rubber material which exhibits superior flame retardancy, mechanical strength and acid resistance, and a flame retardant having as its effective element a magnesium hydroxide solid solution.

### BACKGROUND OF THE INVENTION

JP-A-7 061 812 relates to a method of producing additive-containing magnesium hydroxide and a method of producing additive-containing magnesium oxide.

EP 0544502 relates to an antimicroorganism agent and an antimicroorganism resin or rubber composition.

EP 0 498 566 relates to a composite metal hydroxide, a flame retardant containing the composite metal hydroxide and a flame retardant resin and/or rubber composition containing the flame retardant.

There has been a growing strong demand for flame retardant resin and rubber. However, there is a strong request to limit to a safe method by employing metallic hydroxide material as a means of making them flame retardant rather than using the current common method by a halogen type flame retardant material which simultaneously uses halogen and antimony trioxide. However, even magnesium hydroxide which has the fewest drawbacks among the metallic hydroxide materials requires a rather large amount of combination of about 70 weight % with respect to about 30 weight % of the resin and/or rubber to reach the targeted level of flame retardancy. Therefore, there is a problem caused in that an unacceptable degree of loss in some characteristics of the resin and rubber.

At this point, one of the inventors proposed a magnesium hydroxide solid solution having divalent transition metal represented as the general formula (1);

Mg₁₋ₓM²⁺ ₓ(OH)₂ (1)

wherein M²⁺ denotes at least one type of divalent metal selected from the group consisting of Mn²⁺ , Fe²⁺, Co²⁺, Ni²⁺ , Cu²⁺ and Zn²⁺ , and x indicates a range of 0.001≦ x ≦ 0.9. When this magnesium hydroxide solid solutions is compounded in the resin and/or rubber, flame retardancy and acid resistance are greatly improved, and as a result, the targeted level of flame retardancy can be reached with a minimum amount smaller than that of conventional magnesium hydroxide.

However, as a result of further research, several problems to be solved for the magnesium hydroxide solid solution shown by the general formula (1) were found. The first problem was that compared with the magnesium raw material, the M²⁺ material is expensive, in particular, there is a problem of Co and Ni being expensive. For example, for the Mg₁₋ₓ Niₓ (OH)₂ type magnesium hydroxide solid solution with a range of x being 0.2 ≦ x ≦ 0.6, the flame retardancy and the acid resistance clearly show improvement compared with magnesium hydroxide. However, the solid solution containing just that amount of Ni, is very expensive compared with magnesium hydroxide. The second problem was that along with the increase of the M²⁺ contained, the crystal growth of the magnesium hydroxide solid solution and the dispersibility become worse. However, such a level differs according to the type of the M²⁺ contained.

The present inventors carefully conducted research to resolve the above mentioned issues. As a result, the reason that the magnesium hydroxide solid solution showed superior flame retardancy compared with magnesium hydroxide was discovered. This is due to the catalytic effects of the M²⁺ contained and the lower starting temperature of the dehydration compared with that of the magnesium hydroxide. Further, it was found out that the catalytic effects contribute to improvement in flame retardancy compared with the lower starting temperature of dehydration.

At this point, at least for the catalytic effects of the M²⁺ , it was surmised that just the M²⁺ exposed on the surface of the magnesium hydroxide solid solution in contact with the resin or the rubber of having the possibility to contact this, contributed to this effect. Therefore, if it were possible to place M²⁺ selectively in the vicinity of the surface of the magnesium hydroxide crystals, compared with when the M²⁺ is distributed homogeneously in the magnesium hydroxide crystals, it was thought that it would be possible to work the same catalytic effect with an extremely smaller amount of M²⁺ compared to when the M²⁺ is distributed homogeneously. Furthermore, in the vicinity of the surface of the crystals of the magnesium hydroxide solid solution wherein the M²⁺ is unevenly distributed with a high concentration in the vicinity of the surface of the magnesium hydroxide, the amount of the crystal water dehydrating at a low temperature is said to be smaller than in the case when the M²⁺ is distributed evenly over the entire surface of the crystals in a high concentration because a dehydration of the crystal water is supposed to take place at a temperature lower than that for the magnesium hydroxide. However, this effect is supposed to contribute to flame retardancy to some degree.

### OBJECT OF THE INVENTION

Accordingly one object of the invention was to provide a particular crystal of magnesium hydroxide solid solution based on the above concept. In other words, the invention provides a crystal of magnesium hydroxide solid solution characterised by a diameter of 0 to 2µm and a BET specific surface area of 3 to 10 m²/g and in that the concentration of M²⁺ distributed unevenly in the vicinity of the surface of the crystal is at least twice the average concentration of the M²⁺ in the crystal of the magnesium hydroxide solid solution represented as the general formula (2);

Mg₁₋ₓM²⁺ ₓ (OH)₂ (2)

wherein M²⁺ denotes at least one type of divalent metal ion selected Mn²⁺, Fe²⁺, Co²⁺, Ni²⁺, Cu²⁺ and Zn²⁺, and x indicates a range of 0.001≦ x < 0.5, preferably 0.005≦ x ≦ 0.2, more preferably 0.001 ≦ x ≦ 0.1.

Further, the invention provides the above mentioned crystal of magnesium hydroxide solid solution whereby the level of the concentration of the M²⁺ distributed unevenly in the vicinity of the surface of each crystal is preferably 5 times that of the average concentration of the M²⁺ in the magnesium hydroxide solid solution.

Furthermore, the invention provides a flame retardant resin and/or rubber composition comprising 20 to 250 parts of the above mentioned crystal of the magnesium hydroxide solid solution as the effective material, and 100 parts of resin or rubber.

The invention further provides a flame retardant resin and/or rubber composition characterised in that the crystal of the magnesium hydroxide solid solution is surface treated with at least one type of surface treatment material selected from higher fatty acids or alkali metal salts thereof, anionic surfactants, phosphate esters, silane type coupling agents, titanate type coupling agents, aluminium type coupling agents, or esters derived from multivalent alcohols and fatty acids.

Further still, the invention provides a production method for the above mentioned crystal of magnesium hydroxide solid solution.

### DISCLOSURE OF THE INVENTION

In the crystal of magnesium hydroxide solid solution of the formula (2), crystals are in a diameter of 0.4 to 2µm and also it is preferable to use one which has practically no or less secondary aggregates. Also, a BET specific surface area is 3 to 10m²/g. The above mentioned range for the magnesium hydroxide solid solution is the suitable range for maintaining the compatibility with resin, dispersibility, moldability, processability, the surface appearance of the product, the mechanical strength and the flame retardancy contained in the resin and/or rubber.

In the magnesium hydroxide solid solution mentioned of the formula (2), M²⁺ is at least one divalent metal ion selected from the group consisting of Mn²⁺, Fe²⁺, Co²⁺ , Ni²⁺ , Cu²⁺ and Zn²⁺ . When M²⁺ consists of a plurality of divalent metal ions, x is a total of these metal ions. Among the above mentioned divalent ions, Ni, Co and Mn are preferable, arid particularly Ni and Mn are preferable. Ni, along with showing remarkable results in improving acid resistance, is also superior in terms of flame retardancy and in heat aging resistance. Mn, along with being particularly superior in terms of flame retardancy, is white and can be easily colored.

The crystal of magnesium hydroxide solid solution of this invention is different from the magnesium hydroxide solid solution in which the M²⁺ is distributed homogeneously; the concentration of the M²⁺ in the vicinity of the surface of the crystals measured by XPS or Auge, is remarkably denser than the concentration x of the M²⁺ measured by chemical analysis. Furthermore, for most of the M²⁺ , for example for the Ni, the speed of the initial acid reaction measured by the PH STAT method, is remarkably slow compared with when distributed homogeneously.

Next, an explanation of the production method as defined by claim 2 for the magnesium hydroxide solid solution of the present invention is explained. Production step (ii) can be carried out by adding, with sufficient stirring, the M²⁺ aqueous solution in the aqueous solution in which magnesium hydroxide is evenly dispersed and wherein at least one type of chloride selected from the group consisting of magnesium chloride, sodium chloride, calcium chloride, is dissolved and reacting thereof. The reaction temperature is about 20 to 200°C, preferably 70 to 150°C. Although the reaction time differs according to the reaction temperature, it is about 0.1 to 5 hours, more preferably 0.2 to 2 hours. Also, a lower level of the concentration of the M²⁺ is preferable.

Based on the production method for the magnesium hydroxide solid solution for the above mentioned invention, it is possible to place the M²⁺ just in the vicinity of the surface of the magnesium hydroxide without harmful effects on the diameter of the crystal particles of the magnesium hydroxide which is the starting material or on the dispersibility.

It is possible to produce the magnesium hydroxide used in step (i) with various methods. For example, after adding, with sufficient stirring, 0.5 to 0.95 per equivalent of Mg of such alkali as calcium hydroxide at 40°C or lower, preferably 30°C or lower, to the magnesium in the aqueous solution containing magnesium ions such as magnesium chloride, and causing a reaction. After that, with the mother liquor, the reaction is proceeded hydrothermally at 100 to 200 °C for several hours.

The crystal of magnesium hydroxide solid solution of the present invention can be directly used as a flame retardant. Further, the crystal of magnesium hydroxide solid solution of the present invention may be surface-treated with at least one surface treating agent selected from the group consisting of higher fatty acids, anionic surfactants, phosphate esters, coupling agents (of silane, titanate or aluminium type) and esters of polyhydric alchohols and fatty acids.

The surface treating agent is preferably selected from higher fatty acids having 10 or more carbon atoms such as stearic acid, oleic acid, erucic acid, palmitic acid, lauric acid, and behenic acid; alkali metal salts thereof; sulfates of higher alcohols such as stearyl alcohol and oleyl alcohol; anionic surfactants such as a salt of sulfate of polyethylene glycol ether, a salt of amide-bonded sulfate ester, a salt of ester-bonded sulfonate, amide-bonded sulfonate, ether-bonded sulfonate, ether-bonded alkylallyl sulfonate, ester-bonded alkylallyl sulfonate, and amide-bonded alkylallyl sulfonate; phosphate esters such as mono- or diesters of orthophosphoric acid with oleyl alcohol and stearyl alcohol, mixtures of these, acid type or alkali metal salts or amine salts thereof; silane-coupling agents such as vinylethoxysilane, vinyl-tris(2-methoxy-ethoxy)silane, ipsylon-methacryloxypropyltrime thoxysilane, ipsylon-aminopropyltrimethoxysilane, beta-(3,4epoxycyclohexyl)ethyltrimethoxysilane, ipsylon-glycidioxypropyltrimethoxysilane, and ipsylon-mercaptopropyltr imethoxysilane, titanate coupling agents such as isopropyltriisostearoyl titanate, isopropyltris(dioctylpyroph osphate) titanate, isopropyltri(N-aminoethyl-aminoethyl) titanate and isopropyltridecylbenzenesulfonly titanate; aluminium coupling agents such as acetoalkoxyalminium diisopropylate; and esters of polyhydric alcohols and fatty acids such as glycerin monostearate, and glycerin monooleate.

The surface coating treatment of the crystal of magnesium hydroxide solid solution of the formala (2) with the surface treating agent can be carried out by a wet or dry method which itself is known to the public. For example, a wet method may be carried out by adding a liquid or an emulsion of the surface treating agent to the crystal of magnesium hydroxide solid solution and mechanically mixing the mixture, sufficiently, at a temperature up to about 100°C. A dry method may be carried out by adding a liquid, an emulsion, or a solid of the surface treating agent to a powder of the crystal of magnesium hydroxide solid solution, while the powder is sufficiently stirred with a stirrer such as a Henschel mixer, and sufficiently mixing the mixture with or without heating. The amount of the surface treating agent may be freely selected, but it is preferably about 0.1 to about 10% by weight based on the weight of the magnesium hydroxide solid solution. The surface-treated crystal of magnesium hydroxide solid solution may be washed with water, dehydrated, granulated, dried, milled, and classified as required to give a final product.

Examples of the resin and/or rubber to be used in the present invention include thermoplastic resins such as polyethylene, a copolymer of ethylene with other α-olefin, a copolymer of ethylene with vinyl acetate, ethyl acrylate or methyl acrylate, polypropylene, a copolymer of propylene with other α-olefin, PVC, polybutene-1, polystyrene, a styreneacrylonitrile copolymer, a copolymer of ethylene with propylendiene rubber orbuteadiene, vinyl acetate, polyacrylate, polymethacrylate, polyurethane, polyester, polyether, polyamide and the like; thermosetting resins such as phenolic resin, melamine resin, epoxy resin, unsaturated polyester resin, alkyd resin and the like; EPDM, SBR, NBR, butyl rubber, isoprene rubber, chlorosulfonated polyethylene and the like, but the resin and rubber are not limited to

In the present invention, the amount of the crystal of magnesium hydroxide solid solution of the formula (2) for the resin and/or rubber can be suitably selected depending upon the kind of the resin and/or rubber and the kind of the crystal of magnesium hydroxide solid solution of the formula (2). In general, the amount of the crystal of magnesium hydroxide solid solution of the formula (2) which is surface-treated or not surface-treated, is about 20 to 250 parts by weight, preferably about 30 to about 200 parts by weight, based on 100 parts by weight of the resin and/or rubber. When the amount of the crystal of magnesium hydroxide solid solution of the formula (2) is less than the above lower limit, the flame retardancy is insufficient. On the other hand, when this amount exceeds the above upper limit, disadvantageously, the tensile strength, the Izod impact strength, etc., may sometimes decrease, or the acid resistance may sometimes deteriorate. Therefore, it is preferable to select the amount within the above range.

The method for mixing or kneading the resin and/or crystal of magnesium hydroxide solid solution of the formula (2) is not specifically limited, and any means may be employed if a uniform mixture can be prepared. For example, the mixing or kneading can be carried out using a single-screw or twin-screw extruder, a roll, a Banbury mixer and the like. Neither is the method for processing or molding the composition specifically limited, and any known molding means can be used according to the kind of the resin and/or rubber and kind of the article to be molded. For example, the composition can be molded by injection molding, extrusion, blow molding, press molding, rotational molding, calendering, sheet forming, transfer molding, laminate molding, vacuum molding and the like.

The flame retardant resin and/or rubber composition of the present invention may contain other additives in addition to the crystal of magnesium hydroxide solid solution of the formula (2), if necessary. For example, there may be used a flame-retardant aid containing at least one sort of carbon powder, ferrocene, anthracene, polyacetylene, red phosphorous, acrylic fiber, nickel oxide, and fibrous magnesium hydroxide.

The amount of the flame-retardant aid is preferably used in an amount of about 0.1 to 10 parts by weight based on 100 parts by weight of the resin and/or rubber.

Further, a lubricant which can also work for improving water resistance and acid resistance (whitening preventor) may be used as required. The lubricant is selected from zinc behenate, magnesium behenate, zinc stearate, calcium stearate, magnesium stearate, lead stearate, and aluminium stearate. The lubricant is used in the amount of about 0.1 to 10 parts by weight based on 100 parts by weight of the resin and/or rubber.

The flame-retardant resin composition of the present invention may further contain other conventional additives such as antioxidants, ultraviolet inhibitors, antistatic agents, pigments, anti foaming agents, plasticizers, fillers, reinforcing materials, organohalogen flame retardants, crosslinking agents and the like. The following Examples and Comparative Examples illustrate the present invention in detail.

In Examples and Comparative Examples, "parts" and "%'s" are by weight unless otherwise stated.

### EXAMPLE 1

Calcium hydroxide corresponding 0.9 equivalent to Mg (hereinafter just abbreviated to eq.) synthesized by adding sodium hydroxide (1 eq., 2 mols/L) to calcium chloride (2 mols/L) was added to a magnesium component in an ionic bittern containing magnesium chloride (2.0 mols/L) and calcium chloride (0.8 mols/L) at 25 °C, and the mixture was stirred. The resulting reactive material was charged in an autoclave as it is without washing and subjected to a hydrothermal treatment under pressure at 170°C for 2 hours. The magnesium hydroxide obtained had an average secondary particle size of 0.81µm, a BET specific surface area of 7.0 m²/g, and it formed a sufficiently grown crystal which was dispersed.

Magnesium hydroxide taken out of the autoclave was maintained at 70°C and an aqueous nickel chloride solution (0.2 mols/l) was added to magnesium hydroxide with stirring in the amount corresponding to a molar ratio (Ni/Mg) of 0.02.

After the resultant mixture was reacted at 70 °C for one hour, the reaction product was filtered, partially dehydrated and dried. Almost all of the remainder was dispersed again in hot water at 80 °C and hot water wherein sodium stearate was dissolved in the amount of 3% for the weight of the magnesium hydroxide solid solution was added at 80 °C with stirring. After maintaining for about 30 minutes, the resultant mixture was subjected to a surface treatment, filtered, washed with water, dehydrated, granulated and dried.

The chemical composition was determined by means of the chelatometric titration method, and the composition of the surface of the crystal was determined by means of XPS. The BET specific surface area was measured by means of the nitrogen adsorption method, and the average secondary particle size was measured by means of the microtrack method after subjecting a sample powder to an ultrasonic dispersing treatment in an aqueous 0.2% sodium hexametaphosphate. The acid resistance was determined as follows, that is, 200 mg of a test powder was added to 100 ml of deionized water adjusted to pH 4 and the time (minute) required to consume 10.3 ml corresponding to 15 molar % of 1/10 N HCl was measured while maintaining pH 4 by means of the ph stat method (T₁₅).

The chemical composition, the chemical composition of the surface of the crystal, the acid resistance, the BET specific surface and the average secondary particle size of the sample which was not subjected to the surface treatment were determined. The results are shown in Table 1.

### EXAMPLE 2

In Example 1, after the completion of the hydrothermal treatment, the resulting magnesium hydroxide was cooled to 110 °C. Then, an aqueous nickel solution (0.2 mols/L) was added in the amount corresponding to a molar ratio (Ni/Mg) of 0.02 in the autoclave using a plunger pump and resultant mixture was maintained with stirring at 110 °C for one hour. Thereafter, the resultant mixture was subjected to a surface treatment, filtered, washed with water, dehydrated, granulated and dried according to the same manner as that described in Example 1. The evaluation results of the product are shown in Table 1.

### EXAMPLE 3

In Example 1, magnesium hydroxide taken out of the autoclave was filtered, washed with water and dispersed again in water. Then, an aqueous nickel solution (0.4 mols/L) was added at 25°C in the amount corresponding to a molar ratio (Ni/Mg) of 0.02 with stirring and, after stirring for additional 30 minutes, the resultant mixture was transferred to the autoclave and subjected to a hydrothermal treatment at 140°C for one hour. Thereafter, the mixture was subjected to a surface treatment, filtered, washed with water, dehydrated, granulated and dried according to the same manner as that described in Example 1. The evaluation results of the product are shown in Table 1.

### EXAMPLES 4 AND 5

According to the same manner as that described in Example 2 except for changing the amount of the aqueous nickel chloride solution to the molar ratio (Ni/Mg) of 0.01 (EXAMPLE 4) and 0.05 (EXAMPLE 5), respectively, the operation was carried out. The evaluation results of the product are shown in Table 1.

### COMPARATIVE EXAMPLE 1

In example 1, some of the magnesium hydroxide subjected to a hydrothermal treatment in the autoclave was filtered, washed with water and dried. The remainder was filtered, washed with water and dispersed again in water. Then, an aqueous solution prepared by dissolving sodium stearate in the amount of 3% for the weight of magnesium hydroxide was added with stirring at 80 °C and the mixture was subjected to a surface treatment. Thereafter, the resultant mixture was filtered, washed with water, dehydrated and dried. The evaluation results of the product are shown in Table 1.

### COMPARATIVE EXAMPLES 2 AND 3

To 40 L (20°C ) of an aqueous mixed solution of magnesium chloride and nickel chloride (Mg²⁺=0.8 mols/L, Ni²⁺ =0.3 mols/L, Comparative Example 2) (Mg²⁺ =1.1 mol/L, Ni²⁺ =0.01 mol/L, Comparative Example 3), 18 L (20°C) of calcium hydroxide (2 mols/L) was added with stirring. Both reaction products and mother liquor were transferred to the autoclave and they were subjected to a hydrothermal treatment at 175 °C for 4 hours. Thereafter, some of the mixture was filtered, washed with water and dried and the remainder was filtered, washed with water, dispersed in water and subjected to a surface treatment with sodium stearate according to the same manner as that described in Example 1. Thereafter, the resultant mixture was filtered, washed with water, dehydrated, granulated and dried.

**TABLE 1**

| Example | Average chemical composition Ni/Mg molar ratio | Surface chemical composition Ni/Mg molar ratio | BET m²/g | Average secondary particle size (µm) | Acid resistance (T₁₅) (min) |
|---|---|---|---|---|---|
| 1 | 0.02 | 0.32 | 7.7 | 0.78 | 86 |
| 2 | 0.02 | 0.27 | 7.1 | 0.80 | 71 |
| 3 | 0.02 | 0.24 | 7.5 | 0.71 | 62 |
| 4 | 0.01 | 0.13 | 7.0 | 0.80 | 20 |
| 5 | 0.05 | 0.62 | 7.1 | 0.81 | 112 |

| Comparative Example | | | | | |
|---|---|---|---|---|---|
| 1 | 0 | 0 | 7.0 | 0.81 | 1.5 |
| 2 | 0.30 | 0.30 | 8.2 | 0.70 | 80 |
| 3 | 0.01 | 0.01 | 7.6 | 0.76 | 3.0 |

### EXAMPLE 6

In Example 1, magnesium hydroxide was subjected to a hydrothermal treatment in an autoclave, cooled to 110 °C and, after substituting the autoclave with nitrogen, an aqueous solution of cobalt chloride [0.1 mols/L, molar ratio (Co/Mg) corresponds to 0.02] was added using a plunger pump, followed by maintaining at 110 °C for one hour. Thereafter, the mixture was subjected to a surface treatment, filtered, washed with water, dehydrated, granulated and dried. The evaluation results of the product are shown in Table 2.

### EXAMPLE 7

According to the same manner as that described in Example 6 except for using manganese nitrate in the amount corresponding to a molar ratio (Mn/Mg) of 0.01 in place of cobalt chloride, the operation was carried out. The evaluation results of the product are shown in Table 2.

### EXAMPLE 8

According to the same manner as that described in Example 6 except for using ferrous chloride in place of cobalt chloride, the operation was carried out. The evaluation results of the product are shown in Table 2.

### EXAMPLES 9 AND 10

In Example 3, in place of nickel chloride, 0.1 mol/L of cupric nitrate (Example 9) or an aqueous mixed solution of zinc nitrate and nickel chloride (Zn²⁺=0.1 mols/L, Ni²⁺ =0.1 mols/L, Example 10) was added to magnesium hydroxide so that a molar ratio of Cu/Mg and (Zn + Ni)/Mg may become 0.01, respectively, and the resultant mixture was heated to 100°C with stirring and maintained at the same temperature for one hour. Thereafter, a part of the mixture was filtered, washed with water and dried, and the remainder was subjected to a surface treatment according to the same manner as that described in Example 1. The evaluation results of the product are shown in Table 2.

**TABLE 2**

| Example | Average chemical composition Ni/Mg molar ratio | Surface chemical composition Ni/Mg molar ratio | BET m²/g | Average secondary particle size (µm) |
|---|---|---|---|---|
| 6 | 0.02 | 0.28 | 7.2 | 0.80 |
| 7 | 0.01 | 0.15 | 7.5 | 0.81 |
| 8 | 0.02 | 0.25 | 6.9 | 0.82 |
| 9 | 0.01 | 0.16 | 7.0 | 0.83 |
| 10 | 0.01 | 0.14 | 7.1 | 0.80 |

### EXAMPLES 11 TO 15 AND COMPARATIVE EXAMPLES 4 TO 6

The surface-treated magnesium hydroxide solid solution or magnesium hydroxide obtained in Examples 1 to 10 or Comparative Examples 1 to 3 was mixed with 100 parts of an ethylene-propylene copolymer in the formulation ratio shown in Table 3, respectively. Then, the mixture was kneaded at about 230 °C with an extruder, and the resulting pellets were vacuum-dried and subjected to injection molding to prepare a test piece. The flammability and mechanical strength of the test piece were measured. The results are shown in Table 4. Incidentally, the flammability was determined by subjecting a test piece of 1/16 inch in thickness to a UL94VE test.

**TABLE 3**

| Example | Flame-retardant | Amount | M²⁺ | x of formula (1)/(2) |
|---|---|---|---|---|
| 11 | Example 1 | 145 | Ni | 0.02 |
| 12 | Example 2 | 150 | Ni | 0.02 |
| 13 | Example 3 | 150 | Ni | 0.02 |
| 14 | Example 4 | 170 | Ni | 0.01 |
| 15 | Example 5 | 130 | Ni | 0.05 |

| Comparative Example | | | | |
|---|---|---|---|---|
| 4 | Comparative Example 1 | 205 | - | 0 |
| 5 | Comparative Example 2 | 145 | Ni | 0.3 |
| 6 | Comparative Example 3 | 195 | Ni | 0.01 |
| Note: In the respective Examples and Comparative Examples, 0.1 parts of Irganox 1010 (manufactured by Chibageigy Inc.) and 0.1 parts of Weston 626 (manufactured by GE Co.) were formulated as the antioxidant. | | | | |

**TABLE 4**

| EXAMPLE | Combustibility | Tensile strength (kg · f/mm²) | Elongation (%) | Izod impact strength (kg · cm/cm) |
|---|---|---|---|---|
| 11 | V-0 | 1.75 | 30 | 15 |
| 12 | V-0 | 1.73 | 26 | 12 |
| 13 | V-0 | 1.72 | 25 | 11 |
| 14 | V-0 | 1.68 | 18 | 10 |
| 15 | V-0 | 1.86 | 42 | 20 |

| COMPARATIVE EXAMPLE | | | | |
|---|---|---|---|---|
| 4 | V-0 | 1.60 | 5 | 6 |
| 5 | V-0 | 1.71 | 24 | 13 |
| 6 | V-0 | 1.64 | 8 | 7 |
| Note: The Izod impact strength was measured using a test piece with a notch (1/16 inch in thickness). | | | | |

As shown in the results of Tables 3 and 4, the minimum amount of magnesium hydroxide required to meet the "V-0" level of a UL94VE test in the combustibility test using a test piece of 1/16 inch in thickness was 205 parts. In case of the non-uniformly distributed solid solution of the present invention, it was possible to meet the "V-0" level when using about 150 parts of it in combination with 2 molar % of nickel. This corresponds to the solid solution wherein about 30 molar % of nickel is uniformly distributed.

### EXAMPLES 16 TO 20 AND COMPARATIVE EXAMPLE 7

The surface-treated magnesium solid solution or the magnesium hydroxide obtained in Examples 6 to 10 or Comparative Example 1 was mixed with 100 parts of nylon 6 in the formulation ratio shown in Table 5, respectively. Then, the mixture was kneaded at about 230 °C with an extruder, and the resulting pellets were vacuum-dried and subjected to injection molding at about 230°C to prepare a test piece. The flammability and mechanical strength of the test piece were determined. The results are shown in Table 6.

**TABLE 5**

| | Flame-retardant | Amount | M²⁺ | x of formula (1)/(2) |
|---|---|---|---|---|
| Example | | | | |
| 16 | Example 6 | 45 | Co | 0.02 |
| 17 | Example 7 | 45 | Mn | 0.01 |
| 18 | Example 8 | 45 | Fe | 0.02 |
| 19 | Example 9 | 45 | Cu | 0.01 |
| 20 | Example 10 | 45 | Zn, Ni | 0.01 |

| Comparative Example | | | | |
|---|---|---|---|---|
| 7 | Comparative Example 1 | 70 | - | 0 |
| Note: In the respective Examples and Comparative Examples, 0.2 parts of Irganox was formulated as the antioxidant. | | | | |

**TABLE 6**

| | Combustibility | Tensile strength (kg · f/mm² ) | Izod impact strength (kg · cm/cm) |
|---|---|---|---|
| EXAMPLE | | | |
| 16 | V-0 | 8.50 | 3.1 |
| 17 | V-0 | 8.45 | 3.2 |
| 18 | V-0 | 8.30 | 3.2 |
| 19 | V-0 | 8.20 | 3.0 |
| 20 | V-0 | 8.52 | 3.2 |

| COMPARATIVE EXAMPLE | | | |
|---|---|---|---|
| 7 | V-0 | 7.50 | 2.4 |
| Note: The combustibility was determined using a test piece of 1/8 inch in thickness according to a UL94VE test. | | | |

The izod impact strength test (with notch) was conducted using a test piece of 1/8 inch in thickness.

As is shown in the results of Tables 5 and 6, the minimum amount of magnesium hydroxide required to meet the "V-0" level of a UL94VE test in the combustibility test using a test piece of 1/8 inch in thickness was 70 parts. On the other hand, in case of the non-uniformly distributed solid solution of the present invention, it was possible to meet the "V-0" level when using 45 parts (minimum amount) of it in combination with 1 to 2 molar % of cobalt.

### EFFECT OF THE INVENTION

According to the present invention, a crystal of magnesium hydroxide solid solution wherein a divalent metal ion such as Mn, Fe, Co, Ni and the like is non-uniformly distributed in the vicinity of the surface of the respective crystals, a flame-retardant containing the crystal of magnesium hydroxide solid solution as an active component, a flame-retardant resin composition wherein the flame-retardant is formulated in a resin and/or rubber, and a process for producing the magnesium hyroxide solid solution are provided. This crystal of magnesium hydroxide solid solution affords excellent characteristics of the flame-retardant in comparison with the magnesium hydroxide solid solution wherein the divalent metal ion is uniformly distributed, if only a small amount of the divalent metal ion is used.

## Claims

1. Crystal of magnesium hydroxide solid solution **characterized by** a diameter of 0.4 to 2 µm and a BET specific surface area of 3 to 10 m²/g and in that the concentration of M²⁺ distributed unevenly in the vicinity of the surface of the crystal is at least twice the average concentration of the M²⁺ in the crystal of the magnesium hydroxide solid solution represented as the general formula (2);
Mg₁₋ₓM²⁺ ₓ (OH)₂ (2)
wherein M²⁺ denotes at least one divalent metal ion selected from Mn²⁺, Fe²⁺, Co²⁺, Ni²⁺, Cu²⁺ and Zn²⁺, and x indicates a range of 0.001 ≤ x < 0.5.

2. A method for producing a crystal of a magnesium hydroxide solid solution according to claim 1 comprising the steps; (i) hydrothermally treating an aqueous dispersion in which magnesium hydroxide is homogeneously dispersed and in which at least one type of chloride selected from magnesium chloride, calcium chloride and sodium chloride is dissolved, (ii) adding an aqueous solution containing M²⁺ salts, wherein M²⁺ is at least one divalent metal ion selected from Mn²⁺, Fe²⁺, Co²⁺, Ni²⁺, Cu²⁺ and Zn²⁺, with sufficient stirring to the hydrothermally treated magnesium hydroxide aqueous dispersion at 20 to 200°C and reacting the hydrothermally treated magnesium hydroxide with the M²⁺ for 0.1 to 5 hours so that the concentration of M²⁺ distributed unevenly in the vicinity of the surface of the crystal is at least twice the average concentration of M²⁺ in the crystal.

3. A flame retardant resin and/or rubber composition comprising 20 to 250 parts of the crystal of the magnesium hydroxide solid solution according to claim 1 and 100 parts of resin and/or rubber.

4. A flame retardant resin and/or rubber composition according to claim 3 **characterized by** the M²⁺ of the magnesium hydroxide solid solution being Ni²⁺ and/or Mn²⁺.

5. A flame retardant resin and/or rubber composition according to claim 3 **characterized in that** the crystal of the magnesium hydroxide solid solution is surface treated with at least one type of surface treatment material selected from higher fatty acids or alkali metal salts thereof, anionic surfactants, phosphate esters, silane type coupling agents, titanate type coupling agents, aluminum type coupling agents, or esters derived from multivalent alcohols and fatty acids.

6. A flame retardant material consisting essentially of crystals of a magnesium hydroxide solid solution according to claim 1.

## Patentansprüche

1. Kristall einer festen Magnesiumhydroxidlösung, **gekennzeichnet durch** einen Durchmesser von 0,4 bis 2 µm und einem BET-spezifischen Oberflächenbereich von 3 bis 10 m²/g und **dadurch**, dass die Konzentration von ungleichmäßig verteiltem M²⁺ in der Nähe der Oberfläche des Kristalls wenigstens das Zweifache der durchschnittlichen Konzentration von M²⁺ im Kristall der festen Magnesiumhydroxidlösung ist, repräsentiert **durch** die folgende allgemeine Formel (2):
Mg₁₋ₓ M²⁺ ₓ (OH) ₂ (2)
wobei M²⁺ wenigstens ein bivalentes Metallion kennzeichnet, ausgewählt aus Mn²⁺, Fe²⁺, Co²⁺, Ni²⁺, Cu²⁺ und Zn²⁺, und x einen Bereich von 0,001 ≤ x < 0,5 angibt.

2. Verfahren zur Herstellung eines Kristalls einer festen Magnesiumhydroxidlösung nach Anspruch 1, umfassend die folgenden Schritte: (i) hydrothermales Behandeln einer wässrigen Dispersion, in der Magnesiumhydroxid homogen dispergiert ist und in der wenigstens ein Chloridtyp, ausgewählt aus Magnesiumchlorid, Calciumchlorid und Natriumchlorid, gelöst ist, (ii) Zugeben einer wässrigen Lösung, die M²⁺ Salze enthält, wobei M²⁺ wenigstens ein bivalentes Metallion ist, ausgewählt aus Mn²⁺, Fe²⁺, Co²⁺, Ni²⁺, Cu²⁺ und Zn²⁺, unter ausreichendem Rühren zur hydrothermal behandelten wässrigen Magnesiumhydroxid-Dispersion bei 20 bis 200°C und Reagieren des hydrothermal behandelten Magnesiumhydroxids mit dem M²⁺ über einen Zeitraum von 0,1 bis 5 Stunden, so dass die Konzentration des ungleichmäßig verteilten M²⁺ in der Nähe der Oberfläche des Kristalls wenigstens das Zweifache der durchschnittlichen Konzentration von M²⁺ im Kristall ist.

3. Flammenhemmende Harz- und/oder Gummizusammensetzung, umfassend 20 bis 250 Teile des Kristalls der festen Magnesiumhydroxidlösung nach Anspruch 1 und 100 Teile Harz und/oder Gummi.

4. Flammenhemmende Harz- und/oder Gummizusammensetzung nach Anspruch 3, **dadurch gekennzeichnet, dass** M²⁺ der festen Magnesiumhydroxidlösung Ni²⁺ und/oder Mn²⁺ ist.

5. Flammenhemmende Harz- und/oder Gummizusammensetzung nach Anspruch 3, **dadurch gekennzeichnet, dass** die Oberfläche des Kristalls der festen Magnesiumhydroxidlösung mit wenigstens einer Art von Oberflächenbehandlungsmaterial behandelt wird, ausgewählt aus höheren Fettsäuren oder Alkalimetallsalzen davon, anionischen Tensiden, Phosphatester, Silanhaftmittel, Titanathaftmittel, Aluminiumhaftmittel oder Ester, die von mehrwertigen Alkoholen und Fettsäuren stammen.

6. Flammenhemmendes Material, das im Wesentlichen aus Kristallen einer festen Magnesiumhydroxidlösung nach Anspruch 1 besteht.

## Revendications

1. Cristal de solution solide d'hydroxyde de magnésium **caractérisé par** un diamètre de 0,4 à 2 µm et une surface spécifique BET de 3 à 10 m²/g et en ce que la concentration de M²⁺ distribué non uniformément au voisinage de la surface du cristal est au moins le double de la concentration moyenne du M²⁺ dans le cristal de la solution solide d'hydroxyde de magnésium représentée par la formule générale (2) :
Mg₁₋ₓM²⁺ ₓ (OH)₂ (2)
où M²⁺ désigne au moins un ion de métal divalent sélectionné parmi les M²⁺, Fe²⁺, Co²⁺, Cu²⁺ et Zn²⁺, et x indique une plage de 0,001 ≤ x < 0,5.

2. Procédé de production d'un cristal d'une solution solide d'hydroxyde de magnésium selon la revendication 1, comprenant les étapes de : (i) traitement hydrothermique d'une dispersion aqueuse dans lequel l'hydroxyde de magnésium est dispersé de manière homogène et dans lequel au moins un type de chlorure sélectionné parmi le chlorure de magnésium, le chlorure de calcium et le chlorure de sodium est dissout, (ii) addition d'une solution aqueuse contenant des sels de M²⁺, où le M²⁺ est au moins un ion de métal divalent sélectionné parmi les M²⁺, Fe²⁺, Co²⁺, Cu²⁺ et Zn²⁺, avec une agitation suffisante de la dispersion aqueuse d'hydroxyde de magnésium traitée hydrothermiquement à 20 à 200°C et réaction de l'hydroxyde de magnésium traité hydrothermiquement avec le M²⁺ pendant 0,1 à 5 heures de telle sorte que la concentration de M²⁺ distribué non uniformément au voisinage de la surface du cristal soit au moins le double de la concentration moyenne de M²⁺ dans le cristal.

3. Composition de résine et/ou de caoutchouc ignifuge comprenant de 20 à 250 parties du cristal de la solution solide d'hydroxyde de magnésium selon la revendication 1 et 100 parties de résine et/ou de caoutchouc.

4. Composition de résine et/ou de caoutchouc ignifuge selon la revendication 3, **caractérisée par le fait que** le M²⁺ de la solution solide d'hydroxyde de magnésium est du Ni²⁺ et/ou du Mn²⁺.

5. Composition de résine et/ou de caoutchouc ignifuge selon la revendication 3, **caractérisée en ce que** le cristal de la solution solide d'hydroxyde de magnésium est traité en surface avec au moins un type de matière de traitement de surface sélectionnée parmi des acides gras supérieurs ou leurs sels métalliques alcalins, des agents de surface anioniques, des esters de phosphate, des agents de pontage du type silane, des agents de pontage du type titanate, des agents de pontage du type aluminium, ou des esters dérivés d'alcools et d'acides gras multivalents.

6. Matière ignifuge consistant essentiellement en cristaux d'une solution solide d'hydroxyde de magnésium selon la revendication 1.
